# EUROPÄISCHE PATENTSCHRIFT

(11) **EP 0 974 491 B1**
(45) Veröffentlichungstag und Bekanntmachung des Hinweises auf die Patenterteilung: **30.03.2005**
(21) Anmeldenummer: 99111102.2
(22) Anmeldetag: 08.06.1999
(51) Int. Cl.: B60R 16/02, B60Q 1/52

(54) **Bedienelement für eine Abstandsregelung für Fahrzeuge**
Operating element for a vehicle remote control
Element d'actionnement pour une commande à distance de véhicule

(30) Priorität: 22.07.1998 DE 19832870
(43) Veröffentlichungstag der Anmeldung: 26.01.2000
(73) Patentinhaber: Dr.Ing. h.c.F. Porsche Aktiengesellschaft, 70435 Stuttgart (DE)
(72) Erfinder: Salzer, Volker, 75382 Althengstett (DE); Dimitrov, Michael, 75417 Mühlacker (DE)

(56) Entgegenhaltungen:
- EP-A- 0 591 701
- DE-A- 2 049 849
- US-A- 4 640 997
- US-A- 5 230 400

## Beschreibung

Die Erfindung betrifft ein Bedienlement für eine Abstandsregeleinrichtung für Fahrzeuge nach dem Oberbegriff des Patentanspruches 1.

Aus der DE-OS 20 49 849 ist ein Lenkstockschalter bekannt geworden, dessen Kopf drehbar gelagert ist, wobei der Kopf mehrere radiale Schaltstellungen einnehmen kann. Zusätzlich ist stirnseitig des Kopfes ein axial beweglicher Schaltknopf zum Auslösen weiterer Schaltfunktionen vorgesehen.

Gegenüber diesem Stand der Technik ist es Aufgabe der Erfindung, ein Bedienelement für eine Abstandsregeleinrichtung für Fahrzeuge zu schaffen.

Diese Aufgabe wird erfindungsgemäß mit den Merkmalen des Patentanspruches 1 gelöst. Es wird vorgeschlagen, das Bedienelement mit einem Betätigungshebel zu versehen, der einen drehbar gelagerten Kopf aufweist, der mehrere radiale Schaltstellungen einnehmen kann. Befindet sich der Kopf in seiner Ausgangs-Schaltstellung, so stellt die Abstandsregeleinrichtung einen Ausgangs-Abstand zu einem vorausfahrenden Fahrzeug ein. Durch eine Drehbewegung aus dieser Ausgangs-Schaltstellung heraus sind eine oder mehrere weitere radiale Schaltstellungen für einen Nahabstand einstellbar, in der die Abstandsregeleinrichtung einen Soll-Abstand zu einem vorausfahrenden Fahrzeug einstellt, der gegenüber dem Ausgangs-Abstand vermindert ist. Schließlich sind eine oder mehrere radiale Schaltstellungen vorgesehen, in denen die Abstandsregeleinrichtung einen Fern-Abstand einstellt, der gegenüber dem Ausgangs-Abstand vergrößert ist. Das hiermit geschaffene Bedienelement für eine Abstandsregeleinrichtung ist besonders einfach zu bedienen, da der Fahrer durch einfaches Drehen des Kopfes aus einer Ausgangsposition heraus verschiedene Abstände zu einem vorausfahrenden Fahrzeug einstellbar sind.

Vorteilhafte Weiterbildungen der Erfindung sind in den Unteransprüchen dargestellt.

So wird vorgeschlagen, daß der Kopf in ersten radialen Schaltstellungen für den Nah-Abstand und den Fern-Abstand verrastet und die Abstandsregeleinrichtung in diesen radialen Schaltstellungen einen zuvor gespeicherten Soll-Abstand einstellt. Somit ist hier jeder ersten radialen Schaltstellung ein Abstand eindeutig zugeordnet und die Auswahl des Abstandes ist in besonders sicherer Weise möglich.

Alternativ oder ergänzend können zweite radiale Schaltstellungen zur Beeinflussung eines vorgegebenen Abstandes vorgesehen sein. In diesen zweiten Schaltstellungen verrastet der Kopf nicht, sondern er kehrt nach Betätigung in seine Ausgangslage zurück. Nach einer ersten Alternative soll die Veränderung des zuvor gespeicherten Soll-Abstandes stufenlos und in Abhängigkeit von der Verweildauer in der radialen Schaltstellung erfolgen. Gemäß einer zweiten Alternative erfolgt die Beeinflussung in Stufen, vorzugsweise zwischen 10% und 30%. Jede Anwahl entspricht der Veränderung um eine Stufe. Soll der Ausgangs-Abstand geändert werden, so muß der Kopf aus der Stellung für den Ausgangs-Abstand in eine der radialen Schaltstellungen zur Beeinflussung gebracht werden; die Beeinflussung erfolgt dann in der zuvor beschriebenen Weise. Der auf diese Weise vom Fahrer neu bestimmte Abstandswert wird als neuer Soll-Wert für den Nah-Abstand bzw. den Fern-Abstand gespeichert und kann durch Anwahl einer der entsprechenden radialen Schaltstellungen jederzeit wieder aufgerufen werden. Auch die vorgegebenen bzw. neu gespeicherten Werte für den Nah-Abstand bzw. den Fern-Abstand können durch die radialen Schaltstellungen zur Beeinflussung verändert werden. Hierzu wird zunächst die radiale Schaltstellung angewählt, deren Abstands-Wert verändert werden soll. Ausgehend von dieser Schaltstellung wird dann der für diese radiale Schaltstellung gespeicherte Wert durch Anwahl einer der radialen Schaltstellungen zur Beeinflussung in der oben beschriebenen Weise verändert und der neu eingestellte Wert im Anschluß daran gespeichert. Durch diese Ausbildung der radialen Schaltstellungen ist jederzeit eine Einstellung bzw. Beeinflussung der den rastenden radialen Schaltstellungen zugeordneten Abstands-Wert möglich, ohne daß hierbei die vorteilhafte Überschaubarkeit der Bedienung verloren ginge.

Es wird weiterhin vorgeschlagen, die in der zuvor beschriebenen Weise beeinflußten bzw. veränderten Werte für den Nah-Abstand bzw. den Fern-Abstand auf festgelegte Ausgangswerte zurückzusetzen, wenn eine Bereitschaftsstellung der Abstandsregeleinrichtung verlassen wird. Alternativ erfolgt das Zurücksetzen, wenn das Fahrzeug abgestellt wird, typischerweise also, wenn die Zündung des Fahrzeuges ausgeschaltet bzw. der Zündschlüssel abgezogen wird. In diesem Falle bleiben die beeinflußten/geänderten Werte auch dann erhalten, wenn die Bereitschaftsstellung des Abstands-Regelsystemes verlassen wird. Ferner wird vorgeschlagen, den Kopf so auszubilden, daß er fremdkraftbetätigt in eine vorgegebene radiale Schaltstellung, vorzugsweise in die radiale Schaltstellung für den Ausgangs-Abstand verbringbar ist. Dies geschieht vorzugsweise unter denselben Voraussetzungen, wie sie zuvor für das Zurücksetzen beschrieben wurden. Es ist jedoch nicht notwendig, daß für das Zurücksetzen der Solf-Abstände und das Zurücksetzen des Kopfes in die vorgegebene radiale Schaltstellung übereinstimmende Bedingungen verwendet werden. Durch das Zurücksetzen des Kopfes in die vorgegebene radiale Schaltstellung ist sichergestellt, daß der Fahrer bei Rückkehr in die Bereitschaftsstellung des Abstands-Regelsystems, spätestens aber beim Neustart des Fahrzeuges nicht von zuvor getroffenen Einstellungen überrascht wird, sondern das Abstands-Regelsystem stets den Ausgangs-Abstand einstellt. In Erweiterung der vorgenannten Bedingungen ist ein Zurücksetzen des Kopfes in die vorgegebene Schaltstellung auch dann möglich, wenn die Abstandsregeleinrichtung sich zwar in ihrer Bereitschaftsstellung befindet, jedoch nicht aktiviert ist.

Zur Ausbildung eines solchen Bedienelementes wird vorgeschlagen, daß zum Zurücksetzen in die vorgegebene radiale Schaltstellung eine Rastierung des Kopfes fremdkraftbetätigt aufhebbar ist und der Kopf (feder-)zentriert auf die vorgegebene radiale Schaltstellung gehalten ist. Ein solches Bedienelement kann beispielsweise als Lenkstockschalter ausgebildet sein, der auf einer Traghülse den Kopf trägt. Neben den zur Bedienung der Abstandsregeleinrichtung vorgesehenen radialen Schaltstellung kann ein solcher Lenkstockschalter durch Verschwenken Schaltpositionen einnehmen, die zur Bedienung einer Geschwindigkeitsregelanlage in an sich bekannter Weise verwendbar sind.

Bezüglich der Zuordnung der radialen Schaltstellungen zum Nah-Abstand bzw. Fern-Abstand wird schließlich vorgeschlagen, das Bedienelement im wesentlichen horizontal anzuordnen und die radiale Schaltstellung, die sich durch eine Drehbewegung in Übereinstimmung mit der Drehbewegung der Räder des Fahrzeuges erreichen läßt, dem Nah-Abstand zuzuordnen. Entsprechend ist die radiale Schaltstellung, die sich durch eine Drehbewegung entgegen der Drehbewegung der Räder des Fahrzeuges erreichen läßt, dem Fern-Abstand zugeordnet.

Die Erfindung ist nachstehend anhand des in den Figuren dargestellten Ausführungsbeispieles näher erläutert. Es zeigen:
- Fig. 1: eine Ansicht eines Lenkstockschalters,
- Fig. 2: eine Darstellung vorgegebener radialer Schaltstellungen des Lenkstockschalters nach einer ersten Anwendung,
- Fig. 3: einen Schnitt durch eine Rastierung des Lenkstockschalters,
- Fig. 4: eine seitliche Ansicht der Rastierung,
- Fig. 5: eine Darstellung vorgegebener radialer Schaltstellungen des Lenkstockschalters in Verbindung mit einem abstandsgeregelten Tempostat-System und
- Fig. 6: ein Bedienschema hierzu.

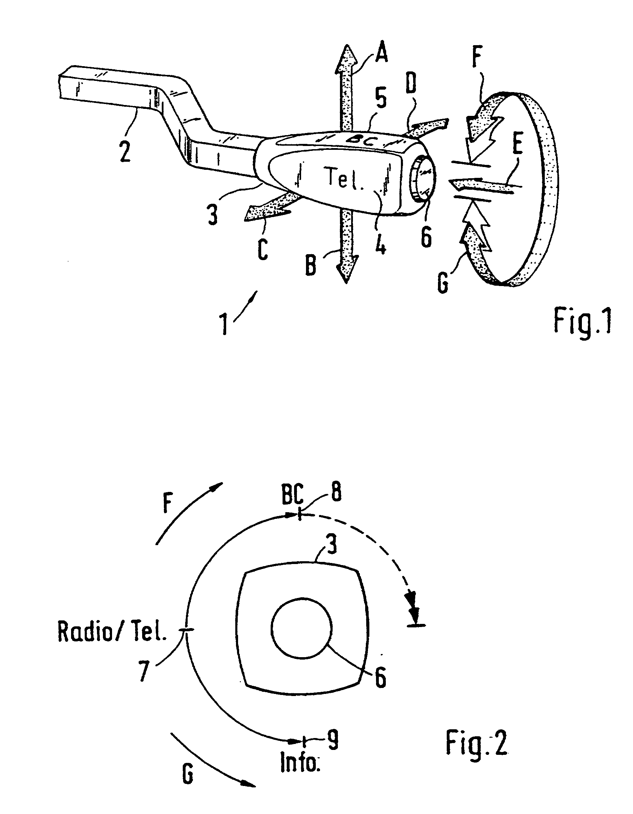

Fig. 1 zeigt einen Lenkstockschalter 1, bestehend aus einer Traghülse 2 und einem Kopf 3. Im vorliegenden Fall ist der Kopf 3 mit der Traghülse 2 um eine Längsachse L der Traghülse 2 schwenkbar verbunden, so daß Bewegungen F und G möglich sind. Die Traghülse 2 ist in nicht näher dargestellter Weise schwenkbar gehalten und erlaubt Bewegungen A bis D. Die Schwenkbewegungen A und B entsprechen einer Auf- und Abbewegung des Lenkstockschalters 1, die Bewegungen C und D einer Vor- und einer Rückbewegung, jeweils bezogen auf einen nicht dargestellten Fahrer. In einer Bewegungsrichtung E wird ein stirnseits des Kopfes 3 angeordneter Knopf 6 betätigt.

Auf dem Kopf 3 sind Beschriftungen 4, 5 angeordnet, wobei die jeweils dem Fahrer zugeordnete Beschriftung - im dargestellten Beispiel ist dies die Beschriftung 4 - dem Fahrer anzeigt, welche radiale Schaltstellung der Kopf 3 gerade einnimmt. Zur Anbringung der Beschriftungen 4,5 können diese auf nicht näher gezeigten Kappen angeordnet sein, die in den Kopf 3 eingeklipst sind. Hiermit ist es möglich, die Beschriftungen der Ausstattung eines mit dem Lenkstockschalter 1 versehenen Fahrzeuges einfach anzupassen.

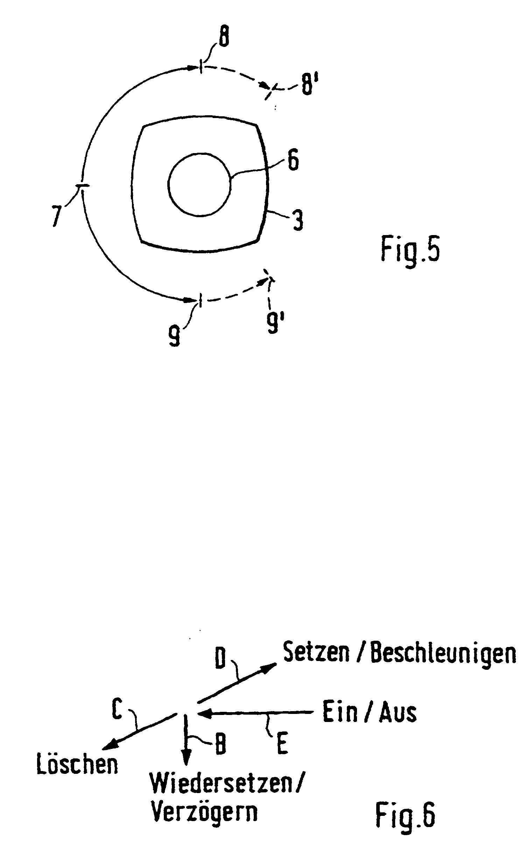

Wie in Fig. 2 näher dargestellt, ist in den verschiedenen Schaltstellungen des Kopfes 3 jeweils die Bedienung eines Gerätes zugeordnet. So sind in der Schaltstellung 7 ein Telefon 21 und ein Radio 25 (vgl. Fig. 5), in der Schaltstellung 8 ein Bordcomputer 23 und in der Schaltstellung 9 ein Infosystem 22 bedienbar, wobei die Bedienung jeweils durch die Bewegungen A bis E erfolgt. Der Kopf 3 verrastet in jeder der Schaltstellungen 7 bis 9. Ergänzend ist es selbtverständlich möglich, auch die in Fig. 2 gestrichelt dargestellte Schaltstellung einem weiteren, nicht dargestellten Gerät zuzuordnen.

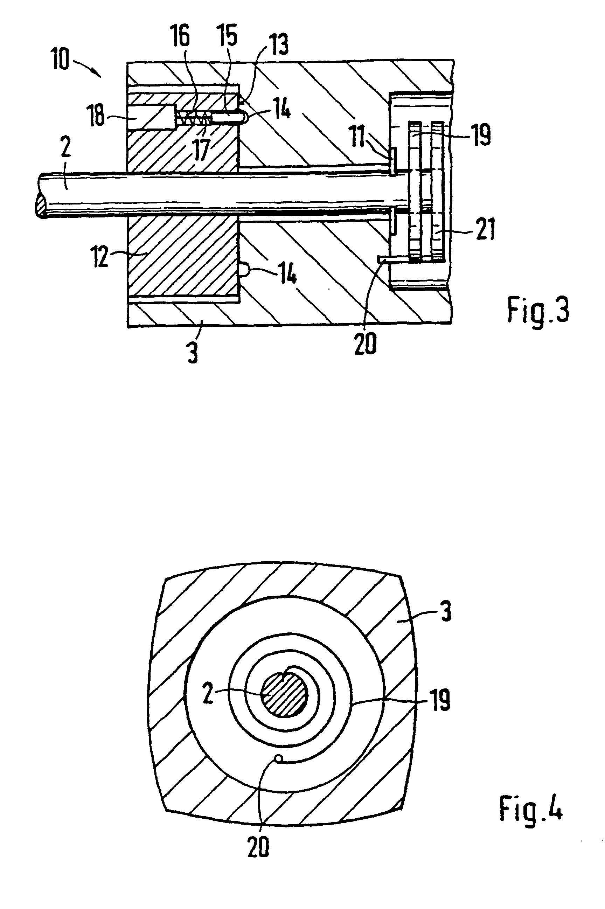

In Fig. 3 und 4 ist eine zur Rastierung des Kopfes 3 verwendete Rasteinrichtung 10 näher dargestellt. Der Kopf 3 ist auf der Traghülse 2 drehbar gelagert und mit einer Sicherungsscheibe 11 in axialer Richtung gesichert. Das zweite axiale Lager für den Kopf 3 ist durch einen Block 12 gebildet, der auf der Traghülse 2 fest angeordnet ist. In einer Berührungsebene 13 zwischen dem Block 12 und dem Kopf 3 sind in den Kopf 3 Vertiefungen 14 eingearbeitet, die den Schaltstellungen 7 bis 9 entsprechen. Korrespondierend zu den Vertiefungen 14 ist im Block 12 ein Raststift 15 angeordnet, der durch eine Feder 16 belastet ist. Gleichzeitig ist der Raststift 15 mit einem Zuganker 17 eines Elektromagneten 18 verbunden. Wird der Magnet 18 bestromt, so wird mittels des Zugankers 17 der Raststift 15 entgegen die Kraft der Feder 16 aus der Vertiefung 14 herausgezogen.

Eine Drehfeder 19, die hier hinter der Sicherungsscheibe 11 angeordnet ist, ist auf der Traghülse 2 drehfest gelagert und greift durch einen Stift 20 am Kopf 3 an. Eine zweite Drehfeder 21 ist ebenfalls auf der Traghülse 2 drehfest gelagert und greift gleichfalls am Stift 20 an. Bei gelöster Rastiereinrichtung 10, d.h. bei frei drehbarem Kopf 3, nehmen die Drehfedern 19, 21 eine Position ein, in der sich die nacheinander entgegengesetzt gerichteten Federkräfte aufheben. Die Federn 19, 21 sind dabei so abgestimmt, daß diese Position der Schaltstellung 7 des Kopfes 3 entspricht.

Mit anderen Worten: Die Bestromung des Elektromagneten 18 hat zur Folge, daß der Kopf 3 durch die Kraft der Drehfeder 19, 21 in eine vorgegebene Position, hier die Schaltstellung 7, bewegt wird. Hierbei ist es selbstverständlich möglich, anstelle der Drehfedern 19, 21 andere Mittel zur Rückstellung des Kopfes 3 in die vorgegebene Schaltposition 7 zu verwenden; beispielsweise kann der Kopf 3 auch elektromotorisch bewegt werden.

In Fig. 5 und 6 ist als weiteres Anwendungsbeispiel des Lenkstockschalters 1 eine Verwandung in Verbindung mit einem abstandsgeregelten Tempostat-System dargestellt. Bei einem abstandsgeregelten Tempostat-System handelt es sich grundsätzlich um eine Einrichtung zur automatischen Einregelung des Fahrzeuges auf eine vom Fahrer vorgegebene Geschwindigkeit. Abstandsgeregelt bedeutet in diesem Zusammenhang, daß zusätzlich der Abstand zu einem in derselben Fahrspur vorausfahrenden Fahrzeug berücksichtigt wird. Hierzu wird der Abstand zu dem vorausfahrenden Fahrzeug bestimmt. Unterschreitet dieser so ermittelte Abstand einen vorgegebenen, vorzugsweise geschwindigkeitsabhängigen Wert, so tritt an die Stelle der Geschwindigkeits-Regelung eine Abstands-Regelung, so daß das eigene Fahrzeug dem vorausfahrenden Fahrzeug in dem durch das System vorgegebenen Abstand folgt. An die Stelle der Abstandsregelung tritt wieder die Geschwindigkeits-Regelung, wenn die zuvor eingestellte Geschwindigkeit erreicht wird. Ein zur Bedienung eines derartigen abstandsgeregelten Tempostat-Systemes verwendeter Lenkstockschalter 1 kann zusätzlich zu einem anderen Lenkstockschalter 1 vorgesehen sein, mit dem wie im ersten Ausführungsbeispiel beschrieben, verschiedene Geräte des Fahrzeuges bedienbar sind.

Fig. 5 zeigt die Schaltstellungen 7 bis 9 sowie 8' und 9' für einen derart verwendeten Lenkstockschalter 1. In der Schaltstellung 7 ist das mit dem Lenkstockhebel 1 verbundene Tempostat-System in seinem Grundzustand, d.h. es wird ein Ausgangs-Abstand zum vorausfahrenden Fahrzeug eingestellt. Dieser Ausgangs-Abstand entspricht vorzugsweise dem gesetzlich vorgeschriebenen Mindest-Abstand. Durch Verdrehen des Kopfes in die Schaltstellung 8 kann der Fahrer einen gegenüber dem Ausgangs-Abstand verminderten Nah-Abstand einstellen. Durch die Schaltstellung 9 kann er demgegenüber einen Fern-Abstand einstellen, der gegenüber dem Ausgangs-Abstand merklich vergrößert ist.

Aus den Schaltstellung 8 und 9 heraus sind weitere Schaltstellungen 8' und 9' anwählbar, in denen der Kopf 3 jedoch nicht verrastet. D.h. zum Anwählen der Schaltpositionen 8' und 9' muß der Kopf 3 vom Fahrer festgehalten werden; läßt der Fahrer den Kopf 3 los, so kehrt dieser in die Schaltstellung 8 bzw. 9 zurück. Es ist auch möglich, nur die Schaltstellungen 8' und 9' vorzusehen, in denen der Kopf 3 nicht verrastet; der Kopf 3 kehrt dann nach Betätigung in die Schaltstellung 7 zurück.

Mit der Schaltstellung 8' ist eine stufenlose Verminderung des Abstandes zum vorausfahrenden Fahrzeug möglich, d.h. so lange der Kopf 3 in der Schaltstellung 8' gehalten ist, wird der Abstand zum vorausfahrenden Fahrzeug kontinuierlich mit geringer Änderungsgeschwindigkeit vermindert. Durch das Loslassen des Kopfes 3 und dessen anschließende Rückkehr in die Schaltstellung 8 wird der auf diese Weise verminderte Abstand gehalten. Ausgehend von der Schaltstellung 8 ist eine weitere Verminderung des Abstandes durch erneutes Anwählen in der Schaltstellung 8' möglich. In analoger Weise kann in der Schaltstellung 9' der Abstand zum vorausfahrenden Fahrzeug stufenlos vergrößert werden.

Alternativ erfolgt die Verminderung des Abstandes zum vorausfahrenden Fahrzeug in der Schaltstellung 8' in Stufen, z.B. im Bereich von 10% bis 30% des Abstandes. Mit jeder Anwahl der Schaltstellung 8' wird der Abstand zum vorausfahrenden Fahrzeug um eine Stufe vermindert. Auch nachdem der Kopf 3 in die Schaltstellung 8 zurückgekehrt ist, wird der auf diese Weise verminderte Abstand gehalten. Durch erneute Anwahl der Schaltstellung 8' ist eine weitere Verminderung des Abstandes um eine weitere Stufe möglich. In analoger Weise kann in der Schaltstellung 9' der Abstand zum vorausfahrenden Fahrzeug in Stufen vergrößert werden.

Wird die Schaltstellung 8' aus der Schaltstellung 7 heraus angewählt, ohne daß der Kopf in der Schaltstellung 8 verweilt, so beginnt die Verminderung des Abstandes ausgehend vom Ausgangs-Abstand und nicht ausgehend vom Nah-Abstand.

Der durch Anwahl der Schaltstellung 8' neu eingestellte, verminderte Abstand wird als neuer Nah-Abstand für die Schaltstellung 8 gespeichert. Analoges gilt für den durch Anwahl der Schaltstellung 9' neu eingestellte, vergrößerten Abstand.

Die in dem Bedienschema nach Fig. 6 gezeigten Schaltpositionen B bis D dienen in an sich bekannter Weise zur Einstellung der Soll-Geschwindigkeit. In der Schaltposition D wird die aktuelle Geschwindigkeit als Soll-Geschwindigkeit als Soll-Geschwindigkeit gesetzt und damit das Tempostat-System aktiviert. Bei bereits aktiviertem Tempostat-System wird das Fahrzeug langsam beschleunigt, solange der Lenkstockschalter 1 in der Schaltposition D gehalten ist. Alternativ wird bei jeder Anwahl der Schaltposition D die Soll-Geschwindigkeit um eine vorgegebene Stufe im Bereich von 10% bis 30% erhöht. Die Schaltposition C dient zum Deaktivieren (Löschen) des Tempostat-Systemes; die aktuell eingestellte Soll-Geschwindigkeit wird zwischengespeichert. Durch Anwählen der Schaltposition B kann nach einem Deaktivieren des Tempostat-Systemes das Tempostat-System wieder aktiviert werden, wobei als Solf-Geschwindigkeit die zuvor gespeicherte Soll-Geschwindigkeit verwendet wird. Ist das Tempostat-System bereits aktiviert, so kann das Fahrzeug durch Anwählen der Schaltposition B so lange verzögert werden, wie die Schaltposition B gewählt ist. Alternativ wird bei jeder Anwahl der Schaltposition B die Soll-Geschwindigkeit um eine vorgegebene Stufe im Bereich von 10% bis 30% vermindert.

Mit Hilfe des Knopfes 6 in Fig. 5 - entsprechend der Schaltposition E in Fig. 6 - kann das Tempostat-System in seine Bereitschaftsstellung gebracht werden. Durch Einschalten der Bereitschaftsstellung (einmaliges Drücken des Knopfes 6) wird das Tempostat-System noch nicht aktiviert; hierzu ist vielmehr zusätzlich das Anwählen der Schaltposition D notwendig. Unabhängig vorn Zustand des Tempostat-Systemes wird durch nochmaliges Drücken des Knopfes 6 das Tempostat-System vollständig abgeschaltet. Gleichzeitig wird der Magnet 18 bestromt, so daß der Kopf 3 in seine Ruhestellung, nämlich die Schaltstellung 7 zurückkehrt.

Beim Ausschalten der Bereitsschaftsstellung durch Drücken des Knopfes 6 werden die zuvor gespeicherte Soll-Geschwindigkeit sowie alle zuvor neu eingestellte und gespeicherte Abstände gelöscht. Durch diese Maßnahme ist sichergestellt, daß beim Abschalten des Tempostat-Systemes fest eingespeicherte Ausgangswerte wieder hergestellt werden, so daß der Fahrer beim erneuten Einschalten des Tempostat-Systemes über den Knopf 6 nicht von zuvor willkürlich gewählten Voreinstellungen überrascht wird. Alternativ ist es möglich, die Löschung erst dann vorzunehmen, wenn das Fahrzeug außer Betrieb genommen wird; dann bleiben die gespeicherten Werte bis zur nächsten Fahrtunterbrechung erhalten.

## Patentansprüche

1. Bedienelement für eine Abstandsregeleinrichtung für Fahrzeuge mit einem Betätigungshebel (1), der einen drehbar gelagerten Kopf (3) aufweist, wobei der Kopf aus einer vorgegebenen radialen Schaltstellung (7), in der die Abstandsregeleinrichtung einen Ausgangs-Abstand zu einem vorausfahrenden Fahrzeug einstellt, heraus in eine radiale Schaltstellung (8, 8') für einen Nah-Abstand, in der die Abstandsregeleinrichtung einen gegenüber dem Ausgangs-Abstand verminderten Abstand zu einem vorausfahrenden Fahrzeug einstellt, und in eine radiale Schaltstellung (9, 9') für einen Fern-Abstand, in der die Abstandsregeleinrichtung einen gegenüber dem Ausgangs-Abstand vergrößerten Abstand zu einem vorausfahrenden Fahrzeug einstellt, bewegbar ist.

2. Bedienelement nach Anspruch 1, **dadurch gekennzeichnet, daß** der Kopf (3) in ersten radialen Schaltstellungen für einen Nah-Abstand (8) und einen Fern-Abstand (9) verrastet und die Abstandsregeleinrichtung bei Anwahl dieser ersten radialen Schaltstellungen einen zuvor gespeicherten Soll-Abstand einstellt.

3. Bedienelement nach Anspruch 1 oder 2, **dadurch gekennzeichnet, daß** zweite radiale Schaltstellungen zur Beeinflussung eines zuvor gespeicherten Soll-Abstandes im Sinne einer Verminderung (8') und einer Vergrößerung (9') vorgesehen sind.

4. Bedienelement nach Anspruch 3, **dadurch gekennzeichnet, daß** die Beeinflussung stufenlos und in Abhängigkeit von einer Verweildauer in den zweiten Schaltstellungen (8', 9') erfolgt.

5. Bedienelement nach Anspruch 3, **dadurch gekennzeichnet, daß** die Beeinflussung in Stufen bei jeder Anwahl einer der zweiten Schaltstellungen (8', 9') erfolgt.

6. Bedienelement nach einem der Ansprüche 2 bis 5, **dadurch gekennzeichnet, daß** die durch Beeinflussung veränderten Soll-Abstände als neue Soll-Abstände gespeichert werden, bis eine Bereitschaftsstellung der Abstandsregeleinrichtung verlassen wird.

7. Bedienelement nach einem der Ansprüche 2 bis 5, **dadurch gekennzeichnet, daß** die durch Beeinflussung veränderten Soll-Abstände als neue Soll-Abstände gespeichert werden, bis eine Außerbetriebnahme des Fahrzeuges erkannt wird.

8. Bedienelement nach einem der Ansprüche 2 bis 7, **dadurch gekennzeichnet, daß** der Kopf (3) durch fremdkraftbetätigtes Zurücksetzen in die vorgegebene radiale Schaltstellung (7) verbringbar ist.

9. Bedienelement nach Anspruch 8, **dadurch gekennzeichnet, daß** das Zurücksetzen dann vorgenommen wird, wenn die Abstandsregeleinrichtung deaktiviert wird.

10. Bedienelement nach Anspruch 8, **dadurch gekennzeichnet, daß** das Zurücksetzen dann vorgenommen wird, wenn eine Bereitschaftsstellung der Abstandsregeleinrichtung verlassen wird.

11. Bedienelement nach Anspruch 8, **dadurch gekennzeichnet, daß** das Zurücksetzen dann vorgenommen wird, wenn eine Außerbetriebnahme des Fahrzeuges erkannt wird.

12. Bedienelement nach einem der Ansprüche 8 bis 11, **dadurch gekennzeichnet, daß** eine Rastierung des Kopfes (3) in den ersten Schaltstellungen (8,9) fremdkraftbetätigt aufhebbar ist und der Kopf zentriert auf die vorgegebene radiale Schaltstellung (7) gehalten ist.

13. Bedienelement nach einem der vorstehenden Ansprüche, **dadurch gekennzeichnet, daß** der Betätigungshebel ein Lenkstockschalter (1) bestehend aus einer Traghülse (2) und einem auf der Traghülse gehaltenen Kopf (3) ist, wobei zumindest der Kopf auf der Traghülse drehbar gehalten ist, in verschiedenen radialen Schaltstellungen (7 bis 9) verrastet und in jeder radialen Schaltstellung durch Verschwenken weitere Schaltpositionen (A bis E) auslösbar sind.

14. Bedienelement nach Anspruch 13, **dadurch gekennzeichnet, daß** die Schaltpositionen (A bis E) zur Bedienung einer Geschwindigkeitsregelanlage vorgesehen sind.

15. Bedienelement nach einem der vorstehenden Ansprüche, **dadurch gekennzeichnet, daß** das Bedienelement (1) im wesentlichen horizontal angeordnet ist und ausgehend von der vorgegebenen radialen Schaltstellung (7)
- die radialen Schaltstellungen (8, 8') für einen Nah-Abstand durch eine erste Drehbewegung (F) in Rollrichtung von Rädern des Fahrzeuges und
- die radialen Schaltstellungen (9, 9') für einen Fern-Abstand durch eine zweite Drehbewegung (G) gegen die Rollrichtung der Räder des Fahrzeuges erreichbar ist.

## Claims

1. An operating element for a distance controller for vehicles, comprising an actuating lever (1) with a rotatably mounted head (3), wherein the head is movable from a predetermined radial switching position (7), in which the distance controller sets a starting distance from a preceding vehicle, into a near-distance radial switching position (8, 8'), in which the distance controller sets a reduced distance from a preceding vehicle relative to the starting distance, and into a far-distance radial switching position (9, 9'), in which the distance controller sets an increased distance from a preceding vehicle relative to the starting distance.

2. An operating element according to claim 1, **characterised in that** the head (3) locks in first radial switching positions for near distance (8) and far distance (9) and, on selection of these first radial switching positions, the distance controller sets a previously stored desired distance.

3. An operating element according to claim 1 or 2, **characterised in that** second radial switching positions are provided for influencing a previously stored desired distance in the direction of a reduction (8') and an increase (9').

4. An operating element according to claim 3, **characterised in that** influencing takes place steplessly and as a function of a duration in the second switching positions (8', 9').

5. An operating element according to claim 3, **characterised in that** influencing takes place in steps for each selection of one of the two switching positions (8', 9').

6. An operating element according to any one of claims 2 to 5, **characterised in that** the desired distances which have been changed by influencing are stored as new desired distances until the distance controller departs from a standby position.

7. An operating element according to any one of claims 2 to 5, **characterised in that** the desired distances which have been changed by influencing are stored as new desired distances until stoppage of the vehicle is detected.

8. An operating element according to any one of claims 2 to 7, **characterised in that** the head (3) is movable into the predetermined radial switching position (7) by servo-controlled resetting.

9. An operating element according to claim 8, **characterised in that** resetting is carried out when the distance controller is deactivated.

10. An operating element according to claim 8, **characterised in that** resetting is carried out when the distance controller departs from a standby position.

11. An operating element according to claim 8, **characterised in that** resetting is carried out when stoppage of the vehicle is detected.

12. An operating element according to any one of claims 8 to 11, **characterised in that** locking of the head (3) in the first switching positions (8, 9) is releasable by servo control, and the head is held centred on the predetermined radial switching position (7).

13. An operating element according to any one of the preceding claims, **characterised in that** the actuating lever is a steering-column switch comprising a supporting sleeve (2) and a head (3) held on the supporting sleeve, wherein at least the head is rotatably held on the supporting sleeve, locks in different radial switching positions (7 to 9), and further switching positions (A to E) are adoptable in each radial switching position by pivoting.

14. An operating element according to claim 13, **characterised in that** the switching positions (A to E) are provided for operating a speed control system.

15. An operating element according to any one of the preceding claims, **characterised in that** the operating element (1) is arranged substantially horizontally and, starting from the predetermined radial switching position (7),
- the near-distance radial switching positions (8, 8') are attainable by a first rotation movement (F) in the rolling direction of wheels of the vehicle, and
- the far-distance radial switching positions (9, 9') are attainable by a second rotation movement (G) counter to the rolling direction of the wheels of the vehicle.

## Revendications

1. Elément de commande pour un dispositif de réglage de distance pour véhicules avec un levier d'actionnement (1) qui comporte une tête (3) montée tournante, la tête étant déplaçable depuis une position de commutation (7) radiale prédéfinie dans laquelle le dispositif de réglage de distance règle une distance initiale par rapport à un véhicule précédent, dans une position de commutation radiale (8, 8') pour une distance rapprochée dans laquelle le dispositif de réglage de distance règle une distance inférieure à la distance initiale par rapport à un véhicule précédent, et dans une position de commutation radiale (9, 9') pour une distance éloignée dans laquelle le dispositif de réglage de distance règle une distance, plus grande que la distance initiale, par rapport à un véhicule précédent.

2. Elément de commande selon la revendication 1, **caractérisé en ce que** la tête (3) s'accroche dans des premières positions de commutation radiales pour une distance rapprochée (8) et une éloignée (9), et le dispositif de réglage de distance règle une distance de consigne mémorisée au préalable, lorsque ces premières positions de commutation radiales sont sélectionnées.

3. Elément de commande selon la revendication 1 ou 2, **caractérisé en ce que** des deuxièmes positions de commutation radiales sont prévues pour agir sur une distance de consigne mémorisée au préalable, dans le sens d'une réduction (8') et d'une augmentation (9').

4. Elément de commande selon la revendication 3, **caractérisé en ce que** l'action s'exerce en continu et en fonction d'une durée de permanence dans les deuxièmes positions de commutation (8', 9').

5. Elément de commande selon la revendication 3, **caractérisé en ce que** l'action s'exerce par degrés pour chaque sélection de l'une des deuxièmes positions de commutation (8', 9').

6. Elément de commande selon l'une des revendications 2 à 5, **caractérisé en ce que** les distances de consigne, modifiées par l'action exercée, sont mémorisées en tant que nouvelles distances de consigne jusqu'à ce que l'on sorte d'une position de veille du dispositif de réglage de distance.

7. Elément de commande selon l'une des revendications 2 à 5, **caractérisé en ce que** les distances de consigne modifiées par l'action exercée, sont mémorisées en tant que nouvelles distances de consigne jusqu'à ce qu'une mise hors service du véhicule soit reconnue.

8. Elément de commande selon l'une des revendications 2 à 7, **caractérisé en ce que** la tête (3) peut être amenée dans la position de commutation radiale (7) prédéfinie par réinitialisation actionnée par une force externe.

9. Elément de commande selon la revendication 8, **caractérisé en ce que** la réinitialisation est effectuée lorsque le dispositif de réglage de distance est désactivé.

10. Elément de commande selon la revendication 8, **caractérisé en ce que** la réinitialisation est effectuée lorsque l'on sort d'une position de veille du dispositif de réglage de distance.

11. Elément de commande selon la revendication 8, **caractérisé en ce que** la réinitialisation est effectuée lorsqu'une mise hors service du véhicule est reconnue.

12. Elément de commande selon l'une des revendications 8 à 11, **caractérisé en ce qu'**un accrochage de la tête (3) dans les premières positions de commutation (8, 9) peut être supprimé sous l'action d'une force externe, et la tête est maintenue centrée sur la position de commutation radiale (7) prédéfinie.

13. Elément de commande selon l'une des revendications précédentes, **caractérisé en ce que** le levier d'actionnement est un commutateur de colonne de direction (1), constitué d'une douille de support (2) et d'une tête (3) maintenue sur la douille de support, au moins la tête étant maintenue tournante sur la douille de support, s'encliquète dans différentes positions de commutation radiales (7 à 9) et dans chaque position de commutation radiales, d'autres positions de commutation (A à E) peuvent être déclenchées par pivotement.

14. Elément de commande selon la revendication 13, **caractérisé en ce que** les positions de commutation (A à E) sont prévues pour commander un système de régulation de la vitesse.

15. Elément de commande selon l'une des revendications précédentes, **caractérisé en ce que** l'élément de commande (1) est disposé sensiblement horizontalement et, partant de la position de commutation radiale (7) prédéfinie, on peut atteindre
les positions de commutation radiales (8, 8') pour une distance rapprochée, par un premier mouvement de rotation (F) dans la direction de roulement des roues du véhicule, et
les positions de commutation radiales (9, 9') pour une distance éloignée, par un deuxième mouvement de rotation (G) dans le sens contraire au sens de roulement des roues du véhicule.
